# EUROPEAN PATENT APPLICATION

(11) **EP 1 814 059 A2**
(43) Date of publication of application: **01.08.2007**
(21) Application number: 06007685.8
(22) Date of filing: 12.04.2006
(51) Int. Cl.: G06K 7/08

(54) **RFID reader/writer**

(30) Priority: 27.01.2006 JP 2006019810
(71) Applicant: FUJITSU LIMITED, Kawasaki-shi, Kanagawa 211-8588 (JP)
(72) Inventor: Maniwa, Toru c/o Fujitsu Limited, Kawasaki-shi Kanagawa 211-8588 (JP); Kimura, Shigekazu c/o Fujitsu Limited, Kawasaki-shi Kanagawa 211-8588 (JP)
(74) Representative: HOFFMANN EITLE

(57) **Abstract**

A reader/writer 25 transmits an instruction for changing over between antennas 31 and 32, carried on a high frequency wave in the same format as a common command. Apart of the antenna is equipped with a command interpretation circuit 30 which demodulates a high frequency wave received from the reader/writer body 25 and obtains a command content. If this command is an antenna changeover instruction of the reader/writer itself, the command interpretation circuit 30 instructs a changeover signal generation unit 28 for generating a changeover signal and changes over antennas by controlling a high frequency wave switch unit 29.

## Description

### Background of the Invention

### Field of the Invention

The present invention relates to an RFID (radio frequency identification) reader/writer.

### Description of the Related Art

Research and development of a technique form an aging goods, et cetera, by attaching thereto an IC chip comprising an antenna and storing identifier information, and externally reading the identifier information from the IC chip by way of radio waves are recently progressing aggressively. An IC chip comprising an antenna is called an RFID tag, while an apparatus emitting radio waves for the purpose of reading identifier information is called an RFID reader/writer. The RFID reader/writer is capable of not only reading identifier information of an IC of an RFID tag but also writing other information to an RFID tag, thus enabling a various applications.

In the case of communicating with an RFID tag by using radio waves, an RFID reader/writer must be capable of communicating with the RFID tag no matter how the RFID tag is positioned, otherwise the usage range of the RFID reader/writer is severely limited.

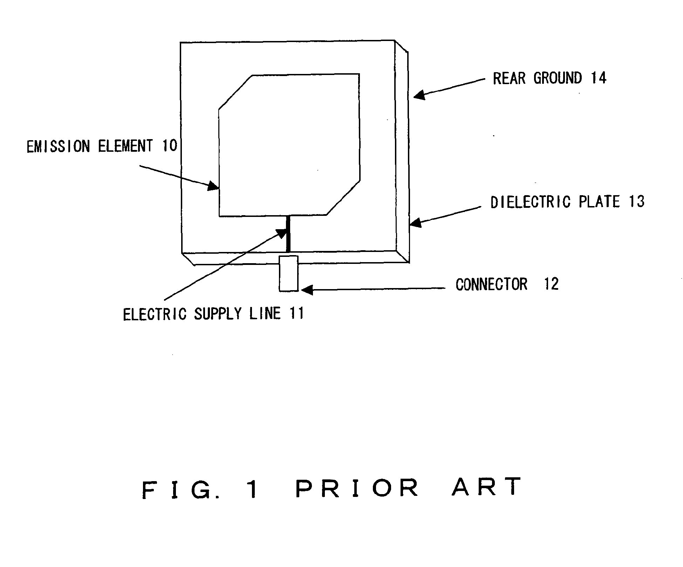

Fig. 1 exemplifies an antenna of a commonly used RFID reader/writer. This is an example of a dielectric patch antenna. What is shown here is a circular polarized wave antenna.

An antenna of an RFID reader/writer commonly has a configuration of a dielectric plate 13 equipped with an emission element 10 comprising a flat metallic plate, et cetera. The emission element 10 is equipped with an electric supply line 11 and a connector 12 for the purpose of connecting to an RFID reader/writer body. The rear surface of the dielectric plate 13 is equipped with a grounding-use rear ground 14 comprising a metallic plate, et cetera.

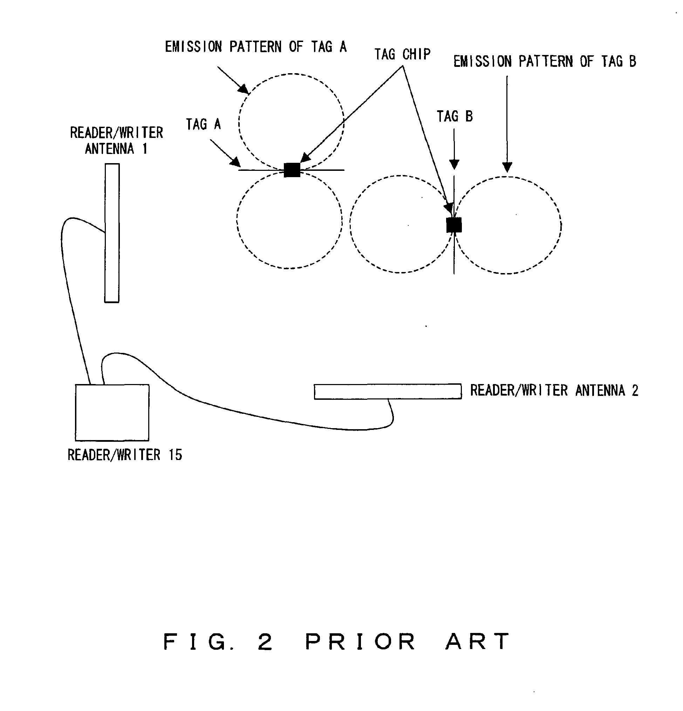

Fig. 2 describes a communication condition between an RFID tag and an RFID reader/writer.

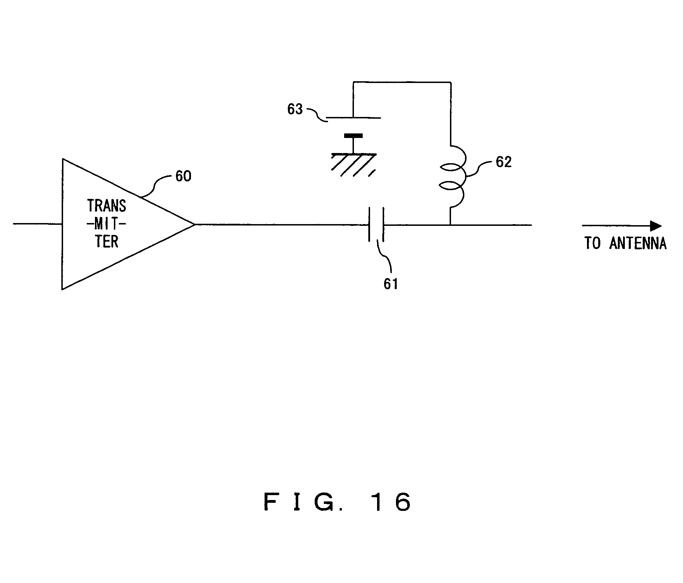

The RFID tag has a representative feature having a tag chip equipped with a dipole antenna. An RDID tag is attached to goods, et cetera, and therefore it is in any position when communicating with an RFID reader/writer. For instance, a tag A can be horizontally positioned, while a tag B can be vertically positioned, both as shown in Fig. 2. In such cases, the emission pattern of the antenna of the tag A is formed to spread to the up and down direction, while that of the antenna of the tag B is formed to spread to the left and right direction. If the element surface of the antenna of the reader/writer 15 is parallel with the paper surface, the reader/writer antenna of a circular polarized wave, shown in Fig. 1, can read both the tag A and tag B. While if the antenna element surface of the reader/writer 15 is perpendicular to the paper surface as shown in Fig. 2, the aforementioned capability is lost. In such a case, the antenna of the reader/writer must be oriented to face upward as the reader/writer antenna 2 shown in Fig. 2 in order for the reader/writer 15 to communicate with the tag A. And the antenna of the reader writer must be oriented to face sideways as the reader/writer antenna 1 shown in Fig. 16 in order for the reader/writer 15 to communicate with the tag B. This has required a conventional RFID reader/writer to have two or more antennas to be changed over as needed for reading information from, or writing data to, RFID tags which are variously positioned.

In order to improve a communication performance between an RFID tag and an RFID reader/writer as described above, there have been conventional methods of changing over writing/reading-use antennas of the RFID reader/writer or changing over polarized waves of an antenna, which, however, has required a control wire for such changeover.

For a conventional noncontact IC card reader/writer, a patent document 1 has disclosed a technique for changing over two antennas at every predetermined time interval.

[Patent document 1] laid-open Japanese Patent Application Publication No. 2004-227315

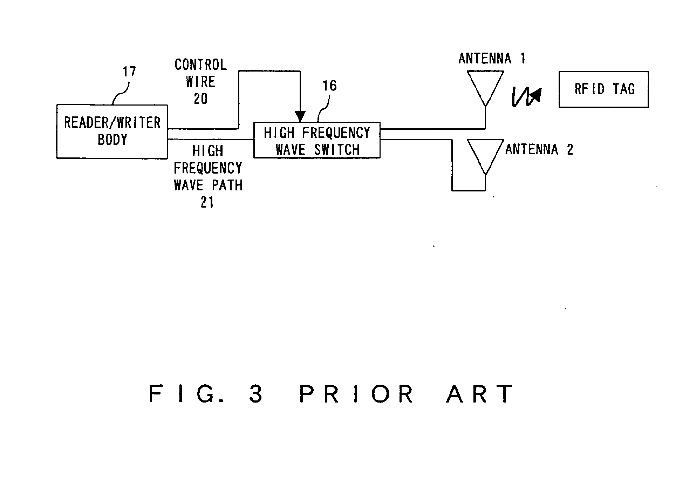

Fig. 3 is a configuration block diagram of a conventional RFID reader/writer featured with an antenna changeover.

As shown in Fig. 3, a high frequency wave path 21 is drawn out from a reader/writerbody 17, and antennas 1 and 2 are connected to a high frequency wave switch 16. A high frequency wave output from the reader/writer body 17 is led through the high frequency wave path 21 and emitted from the antenna 1 or 2 through the high frequency wave switch 16. A control wire 20 is connected to the reader/writer body 17 which outputs a control signal to the high frequency wave switch 16 for instructing as to which antenna to emit high frequency waves.

In such a case, however, if an antenna needs to be added, a control wire must be connected to the reader/writer body 17 anew. Especially if there is no terminal for drawing out a control wire for an additional antenna in the reader/writer body 17, amodification thereof or a purchase thereof anew is required, otherwise an addition of an antenna is impossible. That is, there is aproblemof requiring a troublesome task for connecting, and installing, both an antenna cable and a control wire to the reader/writer body.

### Summary of the Invention

The object of the present invention is to provide an RFID reader/writer enabling an easy addition of an antenna and improving convenience.

A radio frequency identification (RFID) reader/writer according to the present invention comprises a plurality of antennas for the purpose of communicating with an RFID tag from different directions; a command transmission unit for setting, and transmitting, a changeover command for the antennas with the same method as the method to communicate with RFID tag; and an antenna changeover unit for changing over the antennas for use by interpreting the aforementioned command transmitted from the command transmission unit.

The present invention eliminates a necessity of a control wire for an antenna changeover in an RFID reader/writer, thereby improving a convenience of installation.

### Brief Description of the Drawings

Fig. 1 exemplifies an antenna of a commonly used RFID reader/writer;
Fig. 2 describes a communication condition between an RFID tag and an RFID reader/writer;
Fig. 3 is a configuration block diagram of a conventional RFID reader/writer featured with an antenna changeover;
Fig. 4 is a configuration block diagram of a reader/writer according to an embodiment of the present invention;
Fig. 5 is a configuration block diagram of a command interpretation unit;
Figs. 6A through 6D explain antenna changeover commands (part 1) ;
Fig. 7 explains antenna changeover commands (part 2);
Figs. 8A and 8B explain antenna changeover commands (part 3);
Fig. 9 explains an example configuration for the purpose of assigning an ID to an antenna of a reader/writer (part 1);
Fig. 10 explains an example configuration for the purpose of assigning an ID to an antenna of a reader/writer (part 2);
Figs. 11A through 11C exemplify antenna changeover commands;
Fig. 12 explains the case of performing an antenna changeover of another reader/writer (part 1);
Fig. 13 explains the case of performing an antenna changeover of another reader/writer (part 2);
Fig. 14 is a flow chart of notification processing of an antenna ID;
Fig. 15 is a flow chart in the case of controlling other antenna;
Fig. 16 describes a comprisal for the purpose of supplying power to a command interpretation circuit, a changeover signal generation unit and a high frequency wave switch unit (part 1) ; and
Figs. 17A and 17B describe a comprisal for the purpose of supplying power to a command interpretation circuit, a changeover signal generation unit and a high frequency wave switch unit (part 2).

### Description of the Preferred Embodiments

An embodiment of the present invention is configured to superimpose a command on a high frequency wave signal transmitted from a reader/writer for changing over antennas of an RFID reader/writer according to the command. That is, the embodiment of the present invention eliminates a control wire and improves a convenience of installation of an antenna.

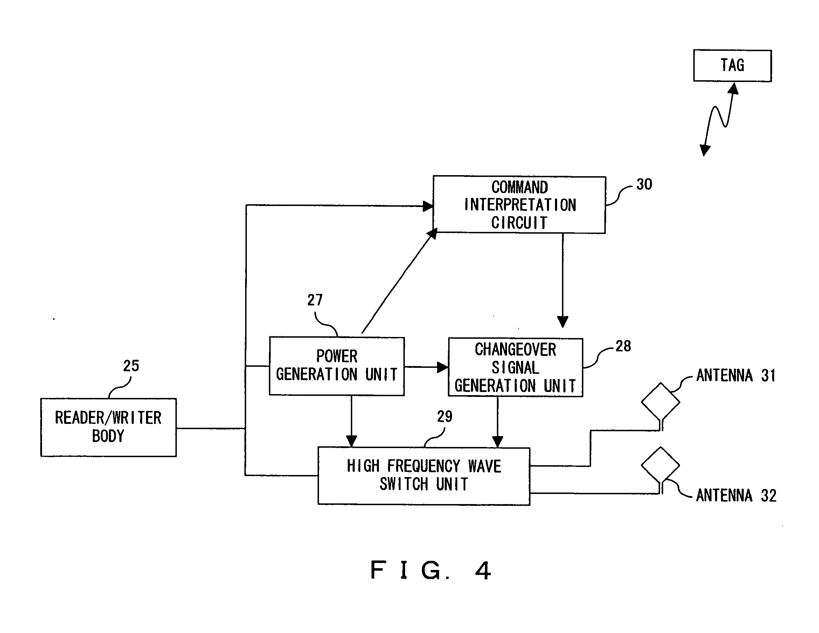

Fig. 4 is a configuration block diagram of a reader/writer according to an embodiment of the present invention.

A changeover command is transmitted from a reader/writer body 25 by carried on a high frequency wave toward reader/writer antennas 31 and 32 which are connected to the reader/writer body 25 per se . A command interpretation circuit 30 reads the command and has changeover information generated. That is, the command interpreted by the command interpretation circuit 30 is input to a changeover signal generation unit 28 which then generates a changeover signal based on the interpretation result of the command at the command interpretation circuit 30 and input it to a high frequency wave switch unit 29. The high frequency wave switch unit 29 selects either one of the antennas 31 and 32 and has it transmit high frequency waves according to the input changeover signal. Electric power is supplied to the command interpretation circuit 30, changeover signal generation unit 28 and high frequency wave switch unit 29 by the power obtained by a power generation unit 27 from high frequency waves transmitted from the reader/writer body 25.

An antenna can be added by adding a unit comprising the antenna 31 and 32, power generation unit 27, changeover signal generation unit 28, high frequency wave switch unit 29 and command interpretation circuit 30. Such a configuration eliminates a necessity of modifying a reader/writer hardware-wise because the comprisal for changing over antennas is integrated as a unit. When adding an antenna, a program of the reader/writer body 25 needs to be changed so that an antenna changeover command, which is transmitted from the reader/writer body 25, is correctively issued. This change can be easily carried out by overwriting a new program to the IC of the reader/writer for example.

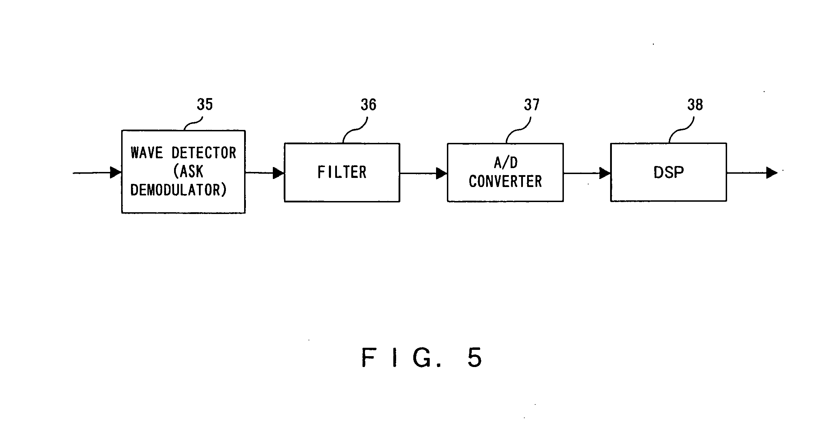

Fig. 5 is a configuration block diagram of a command interpretation unit.

In the command interpretation unit, a wave detector 35 first demodulates a high frequency wave transmitted from the reader/writer body. Since an RFID reader/writer usually transmits high frequency waves which are ASK (Amplitude Shift Keying) -modulated, the wave detector 35 uses an ASK demodulator. However, the wave detector 35 is not limited as such, and instead uses a demodulator conforming to a modulation system used by the reader/writer body for transmitting high frequency waves. Extraneous frequency components are removed from the high frequency wave, which is detected by the wave detector 35, by the high frequency wave being led through the filter 36. The high frequency waves after passing through the filter 36 is converted into a digital signal by an A/D (analog to digital) converter 37, followed by being processed by a DSP (Digital Signal Processor) 38, thereby a command being interpreted.

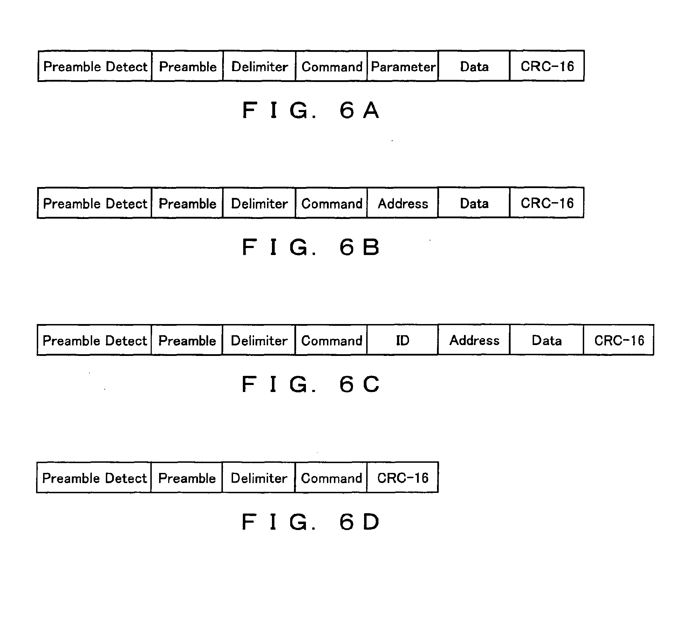

Figs. 6A through 6D, Fig. 7, and Figs. 8A and 8B describe antenna changeover commands.

An antenna changeover command is transmitted by the same one as a command system transmitted from a reader/writer to a tag. Among a command bit string transmitted to a tag, a spare can be allocated, and changeover information can be put into an Address part or a Data part. If the same antenna ID as a tag is allocated to each reader/writer antenna, a changeover antenna can be identified by replacing apart for setting a writing address of data with the antenna ID.

Figs. 6A through 6D describe basic formats of commands transmitted from a reader/writer to a tag.

The command formats shown in Figs. 6A through 6D are the ones specified by the ISO 18000-6 Type B standard. According to the command format shown in Fig. 6A, the frame for transmitting a command is constituted by Preamble Detect, Preamble, Delimiter, Command, Parameter, Data and CRC-16. The Preamble Detect is prepared for the purpose of extracting a power by using high frequency wave of a part thereof, when a tag receives it from a reader/writer, and turn the power on for the IC of the tag, which is a part forming CW high frequency wave. The Preamble is a bit for synchronizing communication between a reader/writer and a tag so as to enable a data exchange between the reader/writer and tag. The Delimiter is a bit for indicating a separation between the preceding part of this, i.e., the Preamble part, and the followingpart, i.e., the Command, etcetera. The Command is a part for setting a parameter necessary for carrying out a command. The Data is a part for setting data to be written in the case of carrying out a write command, et cetera. The CRC-16 is an error correction code.

Fig. 6B shows a command format in the case of an address of memory of a tag being set in the Parameter part. The format shown in Fig. 6B is used in the case of a reader/writer writing data to memory of a tag without specifying a tag or reading data from a specified address. Fig. 6C shows a command format in the case of setting a tag ID and a memory address of a tag in the Parameter part. The format shown in Fig. 6C is used in the case of writing data to a specified address of memory of a tag or reading data therefrom by specifying the tag indicated by the ID. Fig. 6D is a command format with a Parameter part and a Data part being omitted. This is a format in the case of not specifying a tag or in the case of a command for not writing or reading, and used in the case of making a tag send out an ID.

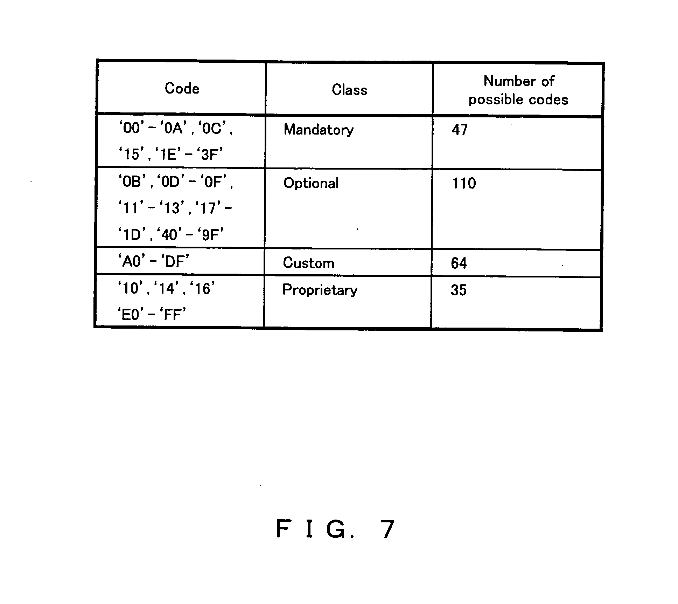

Fig. 7 shows an example of a command.

According to the ISO 18000-6 Type B standard, a command consists of one byte character string as shown by Fig. 7. Here, the AD through DF are defined as Custom command, while 10, 14, 16, E0 through FF are defined as Proprietary command. Therefore, these command character string can be used for an antenna control command of a reader/writer. In the case of using the Custom command, the formats of the ensuing Parameter, Data and CRC must be complied, there is no such rule, however, in the case of using the Proprietary command. For example, it is possible to use a command A0 as the instruction to change over to the antenna 31 and a command A1 as the instruction to change over to the antenna 32. In this case, the Parameter and Data following the command are omitted.

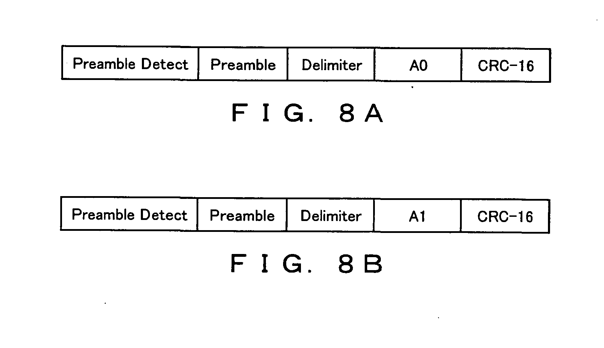

Figs. 8A and 8B show a setting example of a command.

Fig. 8A shows an example of a character string A0 being set in the Command, while Fig. 8B shows an example of a character string A1 being set in the Command. The case of Fig. 8A can be used as an instruction for changing over to the antenna 1, while that of Fig. 8B can be used as an instruction for changing over to the antenna 2.

If an antenna can be identified, a changeover command can be transmitted to another reader/writer antenna and, if a re-emission from another reader/writer antenna causes interference, it is possible to have the other reader/writer change to other differently oriented antenna which is free from the interference.

In the case of transmitting a command to an antenna of another reader/writer, the merely required are an assignment of an ID to an antenna of the other reader/writer, a specification of an ID to the Parameter part of the command format and a description of information such as specifying, in the Data part, the ID of an antenna to be changed over, connecting an antenna, disconnecting the antenna, et cetera. Note that an antenna ID is assigned by a unique value among a plurality of reader/writer in this case.

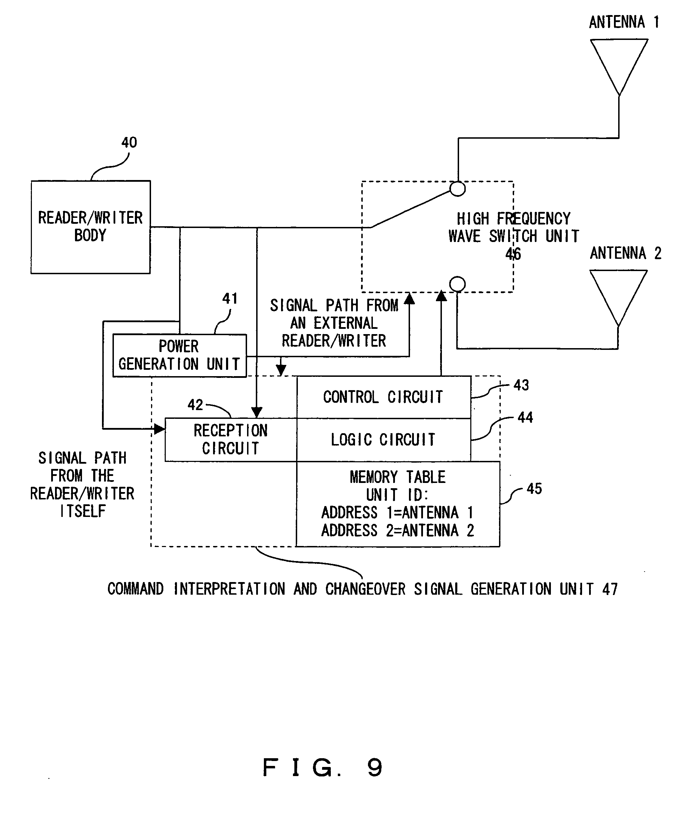

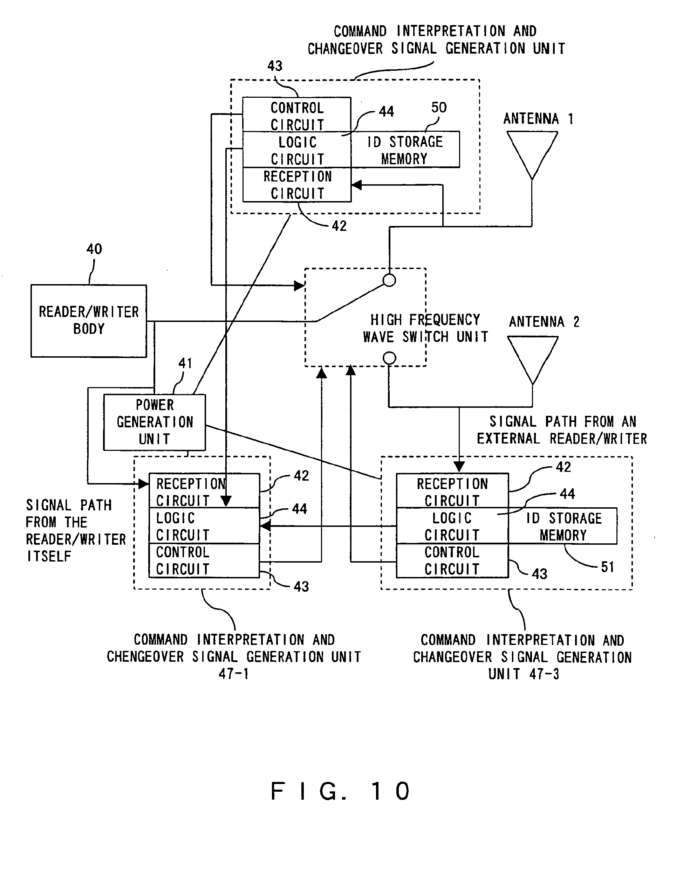

Each of Figs. 9 and 10 describes an example configuration for the purpose of assigning an ID to an antenna of a reader/writer.

In the configuration shown in Fig. 9, high frequency wave emitted from a reader/writer body 40 is converted into a power at a power generation unit 41 and supplied to a command interpretation and changeover signal generation unit 47 and a high frequency wave switch unit 46. The command interpretation and changeover signal generation unit 47 comprises a high frequency wave reception circuit 42, a control circuit 43, a logic circuit 44 and a memory table 45. A high frequency wave emitted from the reader/writer body 40 is received by the reception circuit 42. A command is extracted from the received high frequency wave and interpreted by the logic circuit 44. A memory table 45 is set up with an address 1 indicating the antenna 1 and with an address 2 indicating the antenna 2, as a unit ID. The logic circuit 44 identifies an antenna to be changed over based on the content of the received command, and obtains an antenna address as the antenna ID by referring to a memory table. Giving this ID to a control circuit makes it generate a control signal for the high frequency wave switch unit 46 which then selects, and changes over to, either the antenna 1 or antenna 2 according to the provided control signal. Meanwhile, if another reader/writer sends over an antenna changeover instruction, a high frequency wave received by the antenna 1 or 2 is transmitted to the reader/writer 40 and simultaneously to the reception circuit 42. The logic circuit 44 interprets the command and, if it judges only to be an antenna changeover instruction, transmits an instruction to the control circuit 43 so as to generate a control signal therefrom and have the high frequency wave switch unit 46 carry out an antenna changeover.

In the configuration shown in Fig. 10, the same reference signs are assigned to the same configuration and description thereof are omitted here.

Referring to Fig. 10, command interpretation and changeover signal generation units 47-1, 47-2 and 47-3 are equipped respectively. The command interpretation and changeover signal generation unit 47-1 is disposed to receive an antenna changeover instruction from the reader/writer 40 itself and change over the high frequency wave switch unit 46. The command interpretation and changeover signal generation unit 47-2 is disposed to receive an antenna changeover instruction from another reader/writer received at the antenna 1 and control the high frequency wave switch unit 46. The command interpretation and changeover signal generation unit 47-3 is disposed to receive an antenna changeover instruction from another reader/writer received at the antenna 2 and control the high frequency wave switch unit 46. The command interpretation and changeover signal generation units 47-2 and 47-3 are equipped with ID storage memory 50 and 51 respectively. The ID storage memory 50 and 51 store antenna addresses as IDs so that a logic circuit 44 refers thereto and changes over the high frequency wave switch unit 46 if the respective antenna IDs are set in the command.

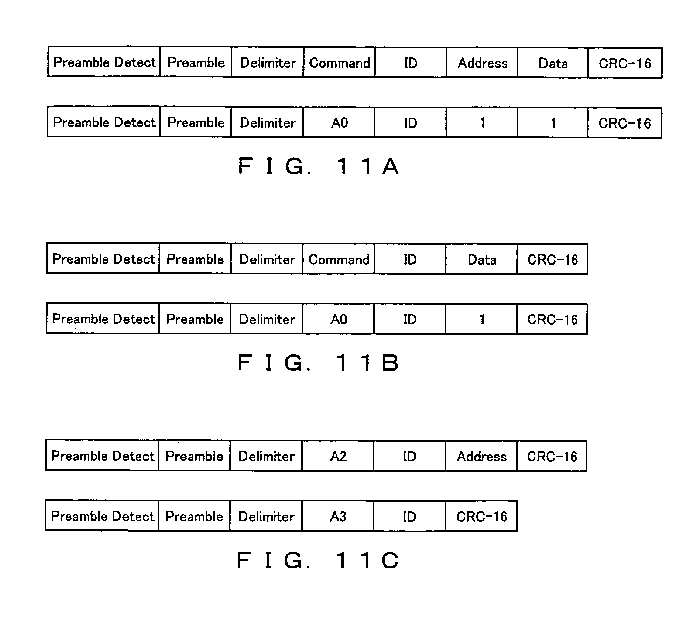

Fig. 11A through 11C exemplifies antenna changeover commands.

In the case of using a format in which an ID and an address are set in the Parameter part as shown in Fig. 11A, if an antenna is set to be ON when an antenna control command is "A0" and Data is "1", then the command is set as shown in the lower part of Fig. 11A. Here, the address "1" indicates the antenna 1. Fig. 11A shows setup examples of commands in the case of Fig. 9. Fig. 11B shows setup examples of commands in the case of Fig. 10, uses a format as shown by the upper part of Fig. 11B, and if the antenna is set as "ON" when the antenna control command is "A0" and Data is "1", then the command is set as shown in the lower part of Fig. 11B. Here, the ID is set by one stored by the ID storage memory 50 and 51.

Meanwhile, a transmission of the antenna ID of the reader/writer itself to other reader/writers first, to begin with a processing, it is possible to notify other reader/writers of the existence of the antenna of its own. For instance, if a command is set as "A2" for notifying them of the existence of a reader/writer antenna comprising as shown in Fig. 9, and a command "A3" for notifying them of the existence of a reader/writer antenna comprising as shown by Fig. 10, then it is possible to carry out an antenna notification instruction by a command setup as shown in Fig. 11C.

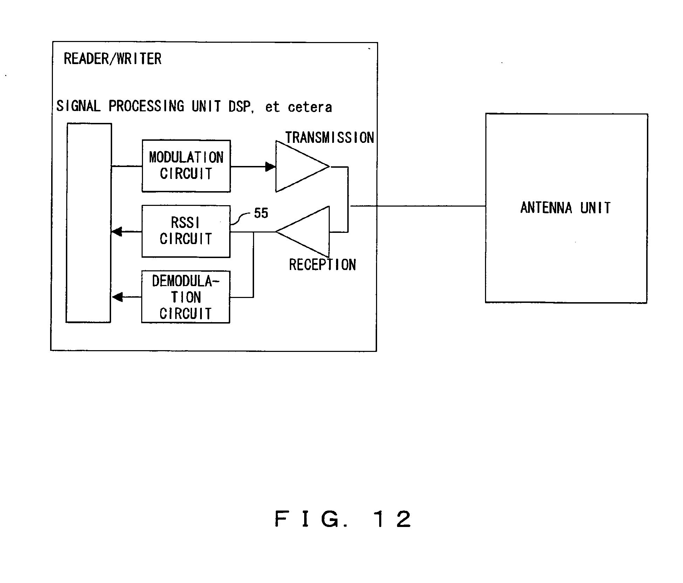

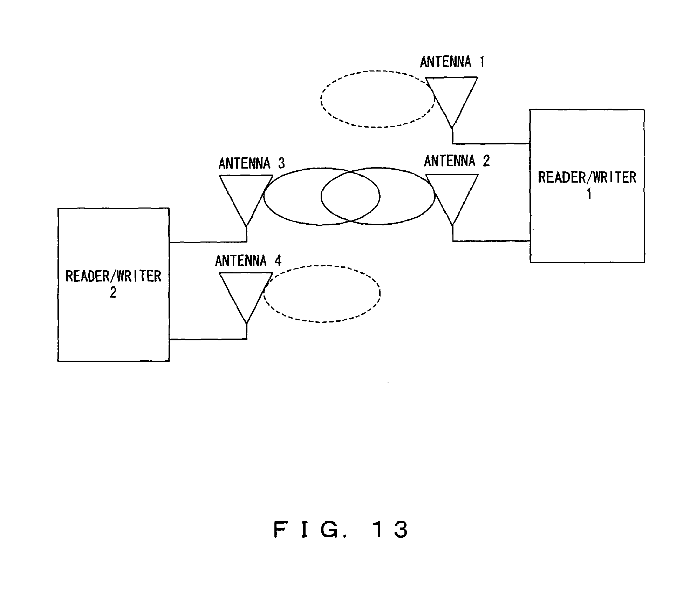

Figs. 12 and 13 describe the case of performing an antenna changeover of another reader/writer.

The reader/writer itself measures a degree of interference of radio waves emitted from another reader/writer with the antenna of its own and, if the interference is larger than a predefined value, transmits an instruction to the other reader/writer for changing the antennas. A receiver connected within the reader/writer is used for measuring a leaking-in power from another reader/writer. An RSSI (Received Signal Strength Indicator) signal is used for the power measurement for example. A common reader/writer is equipped with an RSSI circuit, as standard, shown in Fig. 12, which is disposed for measuring a leaking-in power from another reader/writer. Therefore, the configuration is such that a use of this function measures a leaking-in power from another reader/writer and, if the leaking-in power is larger than a predefined value, an instruction is transmitted to the other reader/writer for changing the antennas.

As shown in Fig. 13, if there is a plurality of antennas connected to two reader/writers and if the antenna emission patterns delineated by the solid curves overlap with each other, there is a possible occurrence of radio wave interference. If either one reader/writer uses the antenna emission pattern indicated by the dotted line, both the reader/writers can operate themselves simultaneously without causing a radio wave interference. In order to acquire the ID of a reader/writer antenna causing interference with the reader/writer itself, the only required for each reader/writer is to transmit the ID of its own at the time of transmitting data.

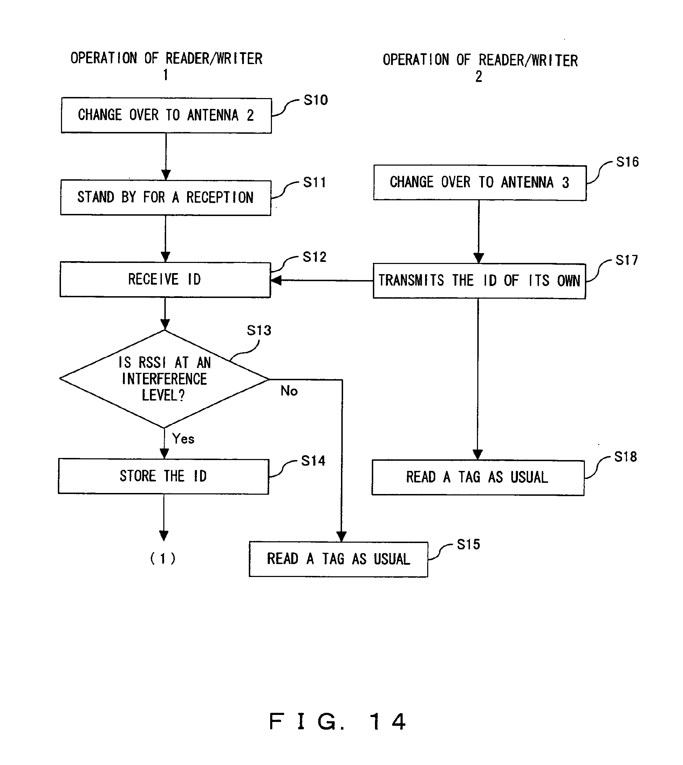

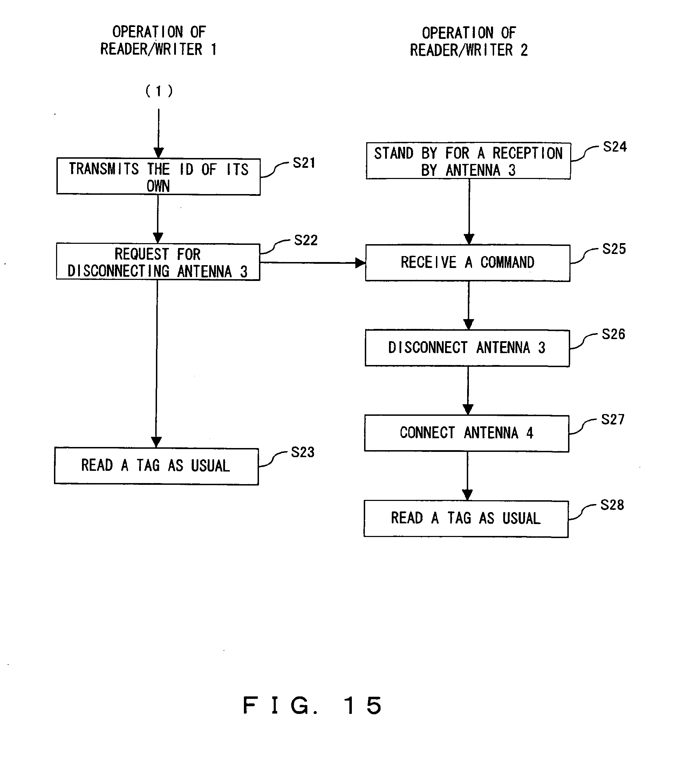

Fig. 14 is a flow chart of notification processing of an antenna ID; and Fig. 15 is a flow chart in the case of controlling other antenna.

Figs. 14 and 15 show the case of the reader/writer 1 controlling the reader/writer 2. First, referring to Fig. 14, the assumption is that the reader/writer 1 changes over to the antenna 2 (step S10; simply "S10" hereinafter). The reader/writer 1 then stands by for reception (S11) . Meanwhile, assuming that the reader/writer 2 changes over to the antenna 3 (S16) and it transmits an ID of the antenna 3 (S17). The reader/writer 2, after transmitting the ID, reads a tag as usual (S18). The reader/writer 1, having received the ID from the reader/writer 2 (S12), judges whether or not the RSSI is a high enough interference level to interfere with a communication of the reader/writer itself (S13). If the judgment for the step S13 is "no", the reader/writer reads a tag as usual (S15). If the judgment for the step S13 is "yes", it stores the ID (S14) and proceeds to the process shown in Fig. 15.

Now referring to Fig. 15, the reader/writer 1 transmits the ID of its own (S21), transmits a request for disconnecting the antenna 3 to the reader/writer 2 (S22) and reads a tag as usual (S23). Meanwhile, the reader/writer 2 is in a standby for a reception by the antenna 3 (S24) and receives a command from the reader/writer 1 (S25). The reader/writer 2 disconnects the antenna 3 (S26), connects the antenna 4 (S27) and reads a tag as usual (S28).

Incidentally, the antennas of the reader/writer 1 are called the antennas 1 and 2, while those of the reader/writer 2 are called the antennas 3 and 4 in the above description.

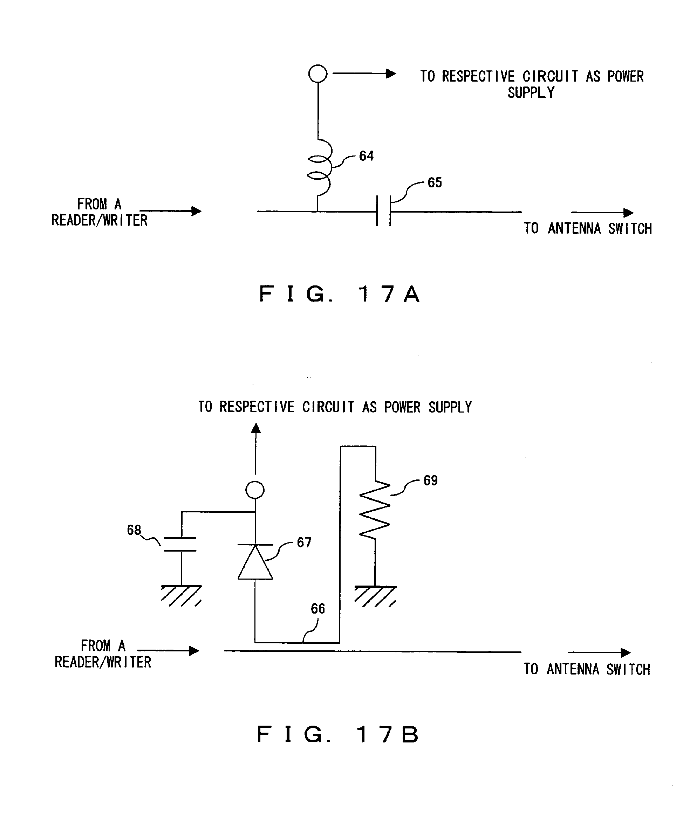

Each of Figs. 16 and 17A and 17B describes a comprisal for the purpose of supplying power to a command interpretation circuit, a changeover signal generation unit and a high frequency wave switch unit.

The merely required for supplying the command interpretation circuit, changeover signal generation unit and high frequency wave switch unit with the power are to have a power supply circuit as shown in Fig. 16 at a reader/writer and extract a DC (direct current) power at a power generation unit of an antenna as shown in Fig. 17A. Alternatively, it is possible to extract a part of a high frequency signal transmitted from a reader/writer by using a directional coupler, rectify it and make it a power source as shown by Fig. 17B.

What is shown in Fig. 16 is a configuration of a DC power supply equipped within a reader/writer. A high frequency wave carrying data is output from a transmitter 60. The DC component is removed from the high frequency wave by it going through a capacitor 61. And a connection of a DC power supply 63 equipped within the reader/writer through an inductance 62 enables a transmission to the antenna side by superimposing a DC power component on a high frequency component.

Fig. 17A shows a configuration for extracting a DC power from a high frequency wave superimposed with a DC power component which is transmitted from a reader/writer. This extracts a DC power component through an inductance 62 and supplies the command interpretation circuit, changeover signal generation unit and high frequency wave switch unit with the power. In the meantime, the high frequency wave after the DC power component being extracted passes through a capacitor 65 by which a DC power component is removed from the high frequency wave and sent to the antenna for emitting therefrom as radio waves.

Fig. 17B shows a configuration for a power generation in the case of a DC power supply not existing within a reader/writer.

High frequency waves without a DC power component are transmitted from the reader/writer. A part of a high frequency component of the high frequency wave is extracted by a directional coupler 66, and a power is stored in a capacitor 68 through a diode 67. A voltage generated by the power stored in the capacitor 68 is supplied to the respective circuits as operating power. Note that a resistor 69 is a termination resistor for the directional coupler 66.

As described thus far, an RFID reader/writer carries out an antenna changeover by a command transmitted from the reader/writer body and therefore an addition of antenna is enabled merely by changing a program for controlling the reader/writer, followed by adding an antenna, eliminating a necessity of modifying the reader/writer or purchasing one anew in order to attach a control wire as in the case of a conventional method, and hence it is possible to provide a highly convenient RFID reader/writer.

## Claims

1. A radio frequency identification (RFID) reader/writer for communicating with an RFID tag, comprising:
a plurality of antennas for the purpose of communicating with an RFID tag from different directions;
a command transmission means for setting, and transmitting, a changeover command for the antennas; and
an antenna changeover means for changing over the antennas for use by interpreting the aforementioned command transmitted from the command transmission means.

2. The radio frequency identification (RFID) reader/writer according to claim 1, wherein
said command transmissionmeans sets an antenna changeover command in data of a data format for the purpose of communicating with an RFID tag.

3. The radio frequency identification (RFID) reader/writer according to claim 1, comprising
an antenna identifier information retention means for retaining identifier information of each antenna.

4. The radio frequency identification (RFID) reader/writer according to claim 3, wherein
said identifier information of each antenna is a unique information among different RFID reader/writers, and an antenna changeover is instructed for antennas of an RFID reader/writer other than the RFID reader/writer itself by using said antenna changeover command.

5. The radio frequency identification (RFID) reader/writer according to claim 4,
measuring an amount of radio waves, which are emitted from an RFID reader/writer other than the RFID reader/writer itself, leaking into the itself, and
instructing an antenna changeover of the aforementioned RFID reader/writer other than the RFID reader/writer itself if the amount of the leaking is larger than a predefined value.

6. An antenna changeover method for a radio frequency identification (RFID) reader/writer for communicating with an RFID tag by using a plurality of antennas,
changing over a plurality of antennas by carrying out an antenna changeover instruction transmitted by the same method as a communication with an RFID tag.
